**Europäisches Patentamt**

**European Patent Office**

**Office européen des brevets**

(11) Veröffentlichungsnummer: **0 204 684**
**B1**

# EUROPÄISCHE PATENTSCHRIFT

(45) Veröffentlichungstag der Patentschrift:
**28.12.88**

(51) Int. Cl.⁴: **C 21 B 13/02**

(21) Anmeldenummer: **86890115.8**

(22) Anmeldetag: **28.04.86**

(54) **Verfahren zur Direktreduktion von teilchenförmigem eisenoxidhaltigem Material.**

(30) Priorität: **13.05.85 AT 1441/85**

(43) Veröffentlichungstag der Anmeldung:
**10.12.86 Patentblatt 86/50**

(45) Bekanntmachung des Hinweises auf die Patenterteilung:
**28.12.88 Patentblatt 88/52**

(84) Benannte Vertragsstaaten:
**DE GB SE**

(56) Entgegenhaltungen:
**DE-A- 2 914 541**
**DE-A- 3 244 744**
**DE-B- 2 810 657**
**FR-A- 1 572 081**
**FR-A- 2 360 670**
**GB-A- 1 310 050**
**US-A- 4 054 444**
**US-A- 4 251 267**

**PATENTS ABSTRACTS OF JAPAN, Band 5, Nr. 164**
**(C-76)[836], 21. October 1981; JP - A - 56 93 805**
**(CHIYODA KAKO KENSETSU K.K.) 29-07-1981**
**PATENTS ABSTRACTS OF JAPAN, Band 4, Nr. 186**
**(C-36)[668], 20. Dezember 1980; JP - A - 55 125 212**
**(SHIN NIPPON SEITETSU K.K.) 26-09-1980**
**PATENTS ABSTRACTS OF JAPAN, Band 3, Nr. 59 (C-46),**
**19. Mai 1979, Seite 149 C 46; JP - A - 54 35 813 (KOBE**
**SEIKOSHO K.K.) 16-03-1979**

(73) Patentinhaber: **VOEST-ALPINE Aktiengesellschaft,**
**Muldenstrasse 5, A-4020 Linz (AT)**

(72) Erfinder: **Der Erfinder hat auf seine Nennung verzichtet**

(74) Vertreter: **Wolfram, Gustav, Dipl.-Ing.,**
**Schwindgasse 7 P.O. Box 205, A-1041 Wien (AT)**

ACTORUM AG

**Beschreibung**

Die Erfindung betrifft ein Verfahren zur Direktreduktion von teilchenförmigem eisenoxidhältigem Material in einem Schachtofen, wobei reformiertes Gas aus einem Reformer als Reduktionsgas einer Reduktionszone des Schachtofens zugeführt wird, die direkt reduzierten eisenhältigen Teilchen aus dem Schachtofen ausgetragen und das bei der Reduktion enstehende Topgas (Gichtgas) aus dem oberen Teil des Schachtofens abgezogen wird, und wobei ein kohlenwasserstoffhältiges Gas in den Schachtofen eingeleitet wird sowie gegebenenfalls das direkt reduzierte eisenhältige Material (Eisenschwamm) mittels eines durch den Schachtofen geführten Kühlgaskreislaufes gekühlt wird.

Verfahren dieser Art sind seit längerem bekannt. Das enstehende, direkt reduzierte eisenhältige Material weist einen Kohlenstoffgehalt auf, welcher für die Weiterverarbeitung zu Stahl nicht ausreichend ist, weshalb man bemüht ist, durch zusätzliche Massnahmen den Kohlenstoffgehalt des eisenhältigen Materials (Eisenschwamm) zu erhöhen.

So ist nach der US-PS 4 054 444 vorgeschlagen worden, niedrige Kohlenwasserstoffe, insbesondere Methan, in den Schachtofen unterhalb der Reduktionszone einzuführen bzw. im unteren Teil des Schachtofens einen Kühlkreislauf einzurichten, um das Freisetzen von Kohlenstoff nach der Boudouard-Reaktion zu begünstigen. Diese Massnahmen sind jedoch für die gewünschte Einstellung des Kohlenstoffgehaltes im Fertigprodukt (Eisenschwamm) nach den gewonnenen Erkenntnissen nicht immer zielführend, insbesondere weil die Spaltungstemperatur von Methan sehr hoch liegt und durch die Vorgänge im Schachtofen Rückreaktionen («Methanisierung»), sogar unter Verbrauch von Kohlenstoff, möglich sind.

Die Erfindung bezweckt die Vermeidung dieser Nachteile und Schwierigkeiten und stellt sich die Aufgabe, ein Verfahren zur Herstellung von direkt reduziertem eisenhältigem Material aus eisenoxidhältigen Teilchen zur Verfügung zu stellen, wobei der Kohlenstoffgehalt des Endproduktes wunschgemäss einstellbar ist und die Zusammensetzung des den Reformer verlassenden Reduktionsgases sowie die Reformierungsreaktion als solche günstig beeinflusst wird.

Die Erfindung, mit der diese Aufgabe gelöst wird, besteht bei einem Verfahren der eingangs definierten Art darin, dass Erdgas in eine mit Niedrigkohlenwasserstoffen angereicherte Fraktion und eine mit höheren Kohlenwasserstoffen angereicherte Fraktion aufgetrennt wird und dass die mit Niedrigkohlenwasserstoffen angereicherte Fraktion durch den Reformer und die mit höheren Kohlenwasserstoffen angereicherte Fraktion in den Schachtofen geleitet wird.

Unter «mit Niedrigkohlenwasserstoffen angereicherte Fraktion» wird eine solche verstanden, die zum grössten Teil aus Methan und Äthan besteht; als «mit höheren Kohlenwasserstoffen angereicherte Fraktion» ist eine solche anzusehen, die im wesentlichen aus Propan, Butan und geringeren Anteilen von Pentan bis Octan besteht.

Beispielsweise wird ein Erdgas mit einer Zusammensetzung von 66,7 Massen-% Methan, 11,0 Massen-% Äthan, 10,3 Massen-% Propan, 3,2 Massen-% n-Butan, 2,7 Massen-% i-Butan, 0,86 Massen-% n-Pentan, 1,40 Massen-% i-Pentan, 0,51 Massen-% Hexan, 0,60 Massen-% Heptan, 0,057 Massen-% Octan, Rest Wasser, $CO_2$, Stickstoff und gegebenenfalls Benzol und Toluol, in eine an Niedrigkohlenwasserstoffen angereicherte Fraktion mit 80,0 Massen-% Methan, 11,7 Massen-% Äthan und 5,1 Massen-% Propan einerseits, und in eine an höheren Kohlenwasserstoffen angereicherte Fraktion mit 5,7 Massen-% Methan, 7,7 Massen-% Äthan, 34,0 Massen-% Propan, 18,1 Massen-% n-Butan, 14,8 Massen-% i-Butan, 4,8 Massen-% n-Pentan, 7,8 Massen-% i-Pentan, 2,9 Massen-% Hexan, 3,3 Massen-% Heptan, 0,31 Massen-% Octan anderseits aufgetrennt.

Als Trennverfahren zur Auftrennung des Erdgases in die beiden Fraktionen wird das bekannte Tiefkühlverfahren bevorzugt, bei dem das vorgereinigte und vorgetrocknete Erdgas fraktioniert abgekühlt und einer Serie von Abscheidern zugeführt wird.

Auch andere bekannte Trennverfahren, wie das Kompressions-, Adsorptions- und Absorptionsverfahren (vgl. Ullmanns Encyklopädie der technischen Chemie, 6. Band, Seiten 745 bis 750, 3. Auflage, Urban & Schwarzenberg 1955), können gegebenenfalls modifiziert und miteinander kombiniert, herangezogen werden.

Die an Niedrigkohlenwasserstoffen angereicherte Fraktion wird durch einen indirekt beheizten Reformer geleitet, um ein Reduktionsgas herzustellen, das im wesentlichen aus Wasserstoff, Kohlenmonoxid und geringen Anteilen von Kohlendioxid und Wasser besteht.

Die erfindungsgemässe Auftrennung der im Erdgas enthaltenen Kohlenwasserstoffe hat auch für die Reformerstufe grosse Bedeutung, weil die Katalysatorrohre des Reformers vor teer- bzw. russförmigen Ablagerungen geschützt werden, die bei Durchleiten von Erdgas, aus dem die höheren Kohlenwasserstoffe nicht weitestgehend entfernt wurden, unvermeidlich auftreten und welche Ablagerungen oft schon nach kurzer Zeit einen Austausch bzw. eine Reinigung der Katalysatorrohre notwendig machen.

Nach einer Ausführungsform des Verfahrens wird die mit höheren Kohlenwasserstoffen angereicherte Fraktion wahlweise unterhalb der Reduktionszone in den Schachtofen oder in die Reduktionszone des Schachtofens eingeleitet. Wird diese Fraktion unterhalb der Reduktionszone, welch letztere sich in Höhe der Einblasöffnungen (Auslässe oder Düsen) für das Reduktionsgas aus dem Reformer ausbildet, eingeleitet, ergibt sich infolge des im Vergleich zu Methan oder Äthan bereits bei niedrigeren Temperaturen beginnenden — im Gegensatz zu Methan irreversiblen — Zerfalls der höheren Kohlenwasserstoffe eine starke Aufkohlung des direkt reduzierten eisenhältigen Materials. Wird die mit höheren Kohlenwasserstoffen angereicherte Fraktion in die Reduktionszone eingeleitet — beispielsweise indem sie dem Reduktionsgas bereits vor dessen Eintritt in den Schachtofen zugesetzt wird — reagieren die Kohlenwasserstoffe mit den in der Reduktionszone vorhandenen sauerstoffhältigen Verbindungen und es wird keine oder nur eine geringe Aufkohlung des eisenhältigen Materials erzielt.

Gemäss einer anderen zweckmässigen Ausführungsform wird bei Vorsehen eines Kühlgaskreislaufes die mit höheren Kohlenwasserstoffen angereicherte Fraktion in den Kühlgaskreislauf eingespeist.

Vorteilhaft wird bei Durchführung des Verfahrens ohne Kühlgaskreislauf das heiss ausgetragene eisenhältige Material (Eisenschwamm) brikettiert, wobei es in vielen Fällen weiters von Vorteil ist, wenn das heiss ausgetragene eisenhältige Material zusammen mit Kohlenstaub einer Korngrösse von 0,2 bis 1 mm brikettiert wird.

Der Kohlenstaub wird zu diesem Zweck mit Vorteil in einer Menge bis 1,5 Massen-%, vorzugsweise 0,6 bis 0,9 Massen-%, bezogen auf das eisenhältige Material, eingesetzt. Höhere Kohlezusätze führen zu einem verminderten Zusammenhalt der Briketts.

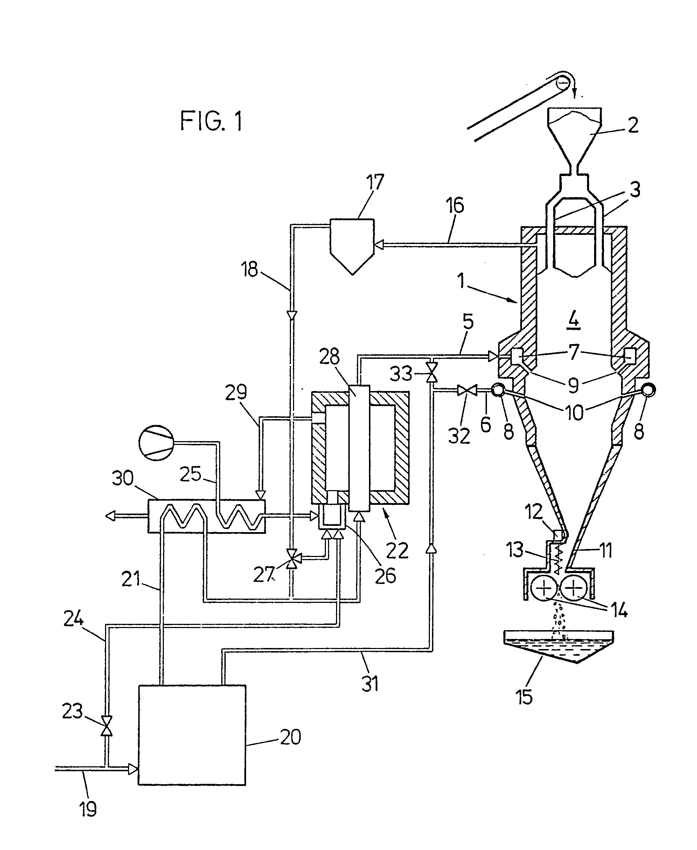

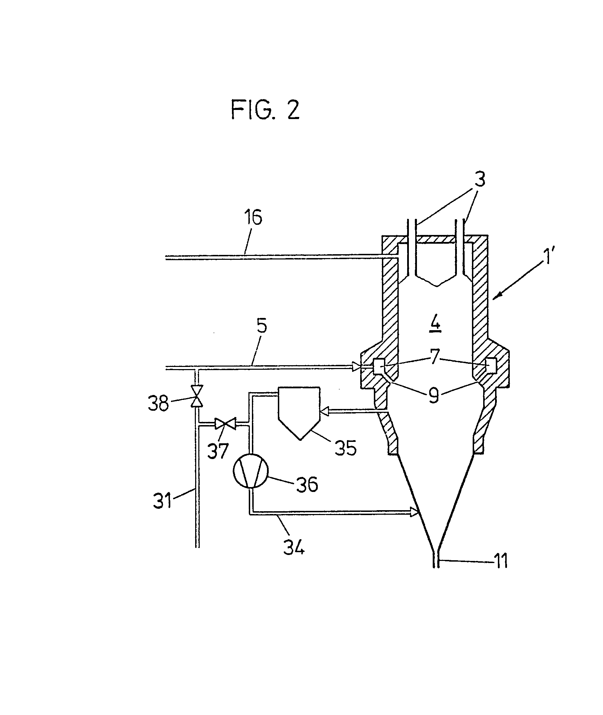

Die Erfindung wird durch die Zeichnung und das folgende Beispiel noch näher erläutert, wobei in Fig. 1 eine Anlage zur Durchführung des Verfahrens ohne Kühlgaskreislauf und in Fig. 2 der Schachtofen einer solchen Anlage mit Kühlgaskreislauf schematisch dargestellt ist.

In Fig. 1 ist mit 1 allgemein ein feuerfest ausgekleideter Schachtofen bezeichnet, der mit Eisenerzpellets aus dem Vorratsgefäss 2 durch Zuführungsrohre 3 beschickt wird. Die zugeführten Eisenerzpellets bilden eine Chargensäule 4, in welche Säule Leitungen 5 und 6 über Ringleitungen 7 und 8 sowie über Gasauslässe 9 und 10 münden. Die Gasauslässe 9 münden in die Reduktionszone und die Gasauslässe 10 unterhalb der Reduktionszone. Am unteren Ende des Schachtofens 1 ist ein Austrag 11 für das direkt reduzierte eisenhältige Material vorgesehen, der im dargestellten Beispiel als Heissgut-Austrag mit einer vom Motor 12 betriebenen Druckschnecke 13, mit zwei Brikettierungswalzen 14 und mit einem wassergefüllten Kühlbad 15 zum Auffangen der Briketts ausgebildet ist. Über die Schnecke 13 kann auch Kohlenstaub beigemengt werden.

Im oberen Teil des Schachtofens 1 ist eine Abgasleitung 16 für Topgas (Gichtgas) vorgesehen, durch welche das Topgas zunächst in einen Kühler-Wäscher 17 gelangt. Das gereinigte und gekühlte Topgas wird durch Leitung 18 weitergeführt.

Das Reduktionsgas wird aus Erdgas bereitet, welches zunächst durch die Leitung 19 einer Trennanlage 20 zugeführt wird. In der Trennanlage 20 wird das Erdgas in eine an Niedrigkohlenwasserstoffen angereicherte und in eine an höheren Kohlenwasserstoffen angereicherte Fraktion aufgetrennt. Die einen grösseren Anteil niedrige Kohlenwasserstoffe enthaltende Fraktion wird durch die Leitung 21 dem Reformer 22 zugeführt. Der Reformer 22 wird indirekt beheizt, und zwar teilweise durch Verbrennen von Topgas aus der Topgas führenden Leitung 18 und gegebenenfalls zusätzlich durch Verbrennung von Erdgas aus der mit einem Absperrorgan 23 ausgestatteten Leitung 24. Weiters ist eine Luftzufuhrleitung 25 zum Brenner 26 vorgesehen. In die Leitung 18 für gereinigtes Gichtgas ist ein Dreiwegventil 27 eingebaut, um das Gichtgas wahlweise gemeinsam mit der an Niedrigkohlenwasserstoffen angereicherten Fraktion aus Leitung 21 in die Katalysatorrohre 28 des Reformers 22 (von denen nur eines dargestellt ist) einleiten oder dem Brenner 26 zuleiten zu können. Die heissen Verbrennungsgase aus dem Reformer 22 werden im dargestellten Ausführungsbeispiel durch eine Leitung 29 einem Rekuperator 30 zugeleitet, in dem durch Wärmeaustausch sowohl die durch Leitung 21 strömende Kohlenwasserstoff-Fraktion als auch die durch Leitung 25 dem Brenner 26 zugeführte Luft vorgewärmt werden können. Das den Reformer 22 verlassende Reduktionsgas wird durch Zuleitung 5 in die Ringleitung 7 des Schachtofens eingespeist.

Die an höheren Kohlenwasserstoffen angereicherte Fraktion aus Trennanlage 20 wird durch die Leitung 31 über Absperrventile 32 und 33 wahlweise der Zuleitung 6, und zwar dann, wenn eine stärkere Aufkohlung des direkt reduzierten eisenhältigen Materials erwünscht ist, oder der Zuleitung 5, nämlich dann, wenn keine oder nur eine geringe Aufkohlung erforderlich ist, zugeführt.

In Fig. 2 ist nur ein Teil der Anlage, nämlich ein Schachtofen 1' mit einem Kühlgaskreislauf 34 gezeigt, wobei analoge Apparateteile gleiche Bezugszeichen aufweisen. In den Kühlgaskreislauf sind ein Wäscher-Kühler 35 und ein Kompressor 36 eingebaut. Bei Vorsehen eines solchen Kühlgaskreislaufes 34 wird die mit höheren Kohlenwasserstoffen angereicherte Fraktion aus der Leitung 31 über ein Ventil 37 direkt in den Kühlgaskreislauf eingespeist. Es ist jedoch alternativ auch möglich, die Fraktion aus Leitung 31 wenigstens zum Teil über ein Ventil 38 in Zuleitung 5 einzuspeisen.

In jedem der in Zusammenhang mit Fig. 2 beschriebenen beiden Fälle wird das reduzierte eisenhältige Material kalt ausgetragen.

*Beispiel*

Erdgas wird in einer Menge von 20 000 m³ unter Normalbedingungen (Nm³)/h der Trennanlage 20 zugeführt, wobei 18 800 Nm³/h mit Niedrigkohlenwasserstoffen angereicherte Fraktion und 1200 Nm³/h mit höheren Kohlenwasserstoffen angereicherte Fraktion gewonnen werden. Die mit Niedrigkohlenwasserstoffen angereicherte Fraktion (I) besteht im wesentlichen aus Methan und Äthan. Die mit höheren Kohlenwasserstoffen angereicherte Fraktion (II) enthält vor allem Propan, Butane und höhere Kohlenwasserstoffe.

Die Fraktion I wird durch die Katalysatorrohre 28 des Reformers 22 geleitet. Das resultierende Reduktionsgas verlässt den Reformer mit einer Temperatur von 950°C und wird durch Zuleitung 5 in den Schachtofen 1 eingeführt, wobei in Höhe der Gasauslässe 9 eine Reduktionszone gebildet wird, in welcher die Reduktion des eisenoxidhältigen Materials zum grössten Teil stattfindet. Die Fraktion II wird zur Gänze durch Zuleitung 6 unterhalb der Reduktionszone in den Schachtofen eingebracht.

Das aus dem Schachtofen 1 heiss ausgetragene, hochmetallisierte Eisenschwamm-Produkt fällt in einer Menge von 80 t/h an und weist einen Kohlenstoffgehalt von 3,2% auf. Ohne Einführung der Fraktion II in den Schachtofen würde ein Eisenschwamm-Produkt mit einem Kohlenstoffgehalt von nur 1,07% resultieren.

Eine Ausführungsform der Erfindung zur Erhöhung des Kohlenstoffanteiles in direkt reduziertem, eisenhältigem Material unter Verwendung einer Anlage der beschriebenen Art, wobei dem Schachtofen ein Reduktionsgas zugeführt wird, dessen kohlenstoffhaltige Bestandteile nicht ausreichen, um den gewünschten höheren Kohlenstoffgehalt im Endprodukt (Eisenschwamm) zu erreichen, besteht darin, dass unterhalb der Reduktionszone, d.h. im unteren Teil des Schachtofens, zusätzlich Kohlenstoff abgebendes Material, wie höhere, unter Normalbedingungen flüssige Kohlenwasserstoffe, Teer, Bitumen oder Kohlenstaub, gegebenenfalls mittels eines Trägergases, eingebracht wird.

## Pastentansprüche

1. Verfahren zur Direktreduktion von teilchenförmigem eisenoxidhältigem Material in einem Schachtofen (1, 1'), wobei reformiertes Gas aus einem Reformer (22) als Reduktionsgas eines Reduktionszone des Schachtofens zugeführt wird, die direkt reduzierten eisenhältigen Teilchen aus dem Schachtofen ausgetragen und das bei der Reduktion entstehende Topgas (Gichtgas) aus dem oberen Teil des Schachtofens abgezogen wird, und wobei ein kohlenwasserstoffhältiges Gas in den Schachtofen eingeleitet wird sowie gegebenenfalls das direkt reduzierte eisenhältige Material (Eisenschwamm) mittels eines durch den Schachtofen geführten Kühlgaskreislaufes (34) gekühlt wird, dadurch gekennzeichnet, dass Erdgas in eine mit Niedrigkohlenwasserstoffen angereicherte Fraktion und eine mit höheren Kohlenwasserstoffen angereicherte Fraktion aufgetrennt wird und dass die mit Niedrigkohlenwasserstoffen angereicherte Fraktion durch den Reformer (22) und die mit höheren Kohlenwasserstoffen angereicherte Fraktion in den Schachtofen (1, 1') geleitet wird.

2. Verfahren nach Anspruch 1, dadurch gekennzeichnet, dass die mit höheren Kohlenwasserstoffen angereicherte Fraktion wahlweise unterhalb der Reduktionszone in den Schachtofen oder in die Reduktionszone des Schachtofens eingeleitet wird.

3. Verfahren nach einem der Ansprüche 1 und 2, dadurch gekennzeichnet, dass bei Vorsehen eines Kühlgaskreislaufes (34) die mit höheren Kohlenwasserstoffen angereicherte Fraktion in den Kühlgaskreislauf (34) eingespeist wird.

4. Verfahren nach einem der Ansprüche 1 und 2, dadurch gekennzeichnet, dass bei Durchführung des Verfahrens ohne Kühlgaskreislauf das heiss ausgetragene eisenhältige Material (Eisenschwamm) brikettiert wird.

5. Verfahren nach Anspruch 4, dadurch gekennzeichnet, dass heiss ausgetragenes eisenhältiges Material zusammen mit Kohlenstaub einer Korngrösse von 0,2 bis 1 mm brikettiert wird.

6. Verfahren nach Anspruch 5, dadurch gekennzeichnet, dass Kohlenstaub in einer Menge bis 1,5 Massen-%, vorzugsweise 0,6 bis 0,9 Massen-%, bezogen auf das eisenhältige Material, eingesetzt wird.

7. Verfahren nach Anspruch 1, dadurch gekennzeichnet, dass zur Einstellung eines gewünschten Kohlenstoffgehaltes im direkt reduzierten, teilchenförmigen eisenhältigen Material unterhalb der Reduktionszone, d.h. im unteren Teil des Schachtofens, zusätzlich Kohlenstoff abgebendes Material, wie höhere, unter Normalbedingungen flüssige Kohlenwasserstoffe, Teer, Bitumen oder Kohlenstaub, gegebenenfalls mittels eines Trägergases, eingebracht wird.

## Claims

1. Method for the direct reduction of particulate ironoxide-containing material in a shaft furnace (1, 1'), wherein reformed gas from a reformer (22) is fed as reducing gas to a reducing zone of the shaft furnace, the directly reduced ferrous particles are discharged from the shaft furnace and the top gas forming during reduction is extracted from the upper section of the shaft furnace, and wherein a hydrocarbon-containing gas is injected into the shaft furnace, and, if desired, the directly reduced ferrous material (sponge iron) is cooled by means of a cooling gas guided in a recirculating system (34) through the shaft furnace, characterised in that natural gas is separated into a fraction enriched with low hydrocarbons and a fraction enriched with higher hydrocarbons, and that the fraction enriched with low hydrocarbons is conducted through the reformer (22) and the fraction enriched with higher hydrocarbons is conducted into the shaft furnace (1, 1').

2. Method according to claim 1, characterised in that the fraction enriched with higher hydrocarbons facultatively is introduced into the shaft furnace below the reducing zone or into the reducing zone of the shaft furnace.

3. Method according to one of claims 1 and 2, characterised in that, if a cooling gas recirculating system (34) is provided, the fraction enriched with higher hydrocarbons is fed into the cooling gas recirculating system (34).

4. Method according to one of claims 1 and 2, characterised in that hot-discharged ferrous material (sponge iron) is briquetted, if the method is carried out without cooling gas recirculating system.

5. Method according to claim 4, characterised in that hot-discharged ferrous material is briquetted commonly with coal dust having a grain size of from 0.2 to 1 mm.

6. Method according to claim 5, characterised in that coal dust is used in an amount of up to 1.5% by mass, preferably 0.6 to 0.9% by mass, based on the ferrous material.

7. Method according to claim 1, characterised in that additional carbon yielding material, such as higher hydrocarbons liquid under normal conditions, tar, bitumen or coal dust, is introduced below the reducing zone, i.e., in the lower section of the shaft furnace, if necessary by means of a carrier gas, to adjust a desired carbon content in the directly reduced, particulate ferrous material.

## Revendications

1. Procédé pour la réduction directe d'une matière en particules contenant de l'oxyde de fer dans un four à cuve (1, 1'), dans lequel on envoie le gaz réformé d'une unité de reformage (22) comme gaz réducteur à une zone de réduction du four à cuve, on retire du four à cuve les particules contenant du fer, réduites directement et on retire à la partie supérieure du four à cuve le gas de gueulard formé dans la réduction, et dans lequel on introduit dans le four à cuve un gaz contenant des hydrocarbures et on refroidit éventuellement la matière contenant du fer réduite directement (éponge de fer) au moyen d'un circuit de gas de refroidissement (34) envoyé à travers le four à cuve, caractérisé en ce que l'on sépare du gaz naturel en une fraction enrichie en hydrocarbures inférieurs et une fraction enrichie en hydrocarbures supérieurs et en ce que l'on envoie la fraction enrichie en hydrocarbures inférieurs à travers l'unité de reformage (22) et la fraction enrichie en hydrocarbures supérieurs dans le four à cuve (1, 1').

2. Procédé selon la revendication 1, caractérisé en ce que la fraction enrichie en hydrocarbures supérieurs est envoyée au choix sous la zone de réduction dans le four à cuve ou dans la zone de réduction du four à cuve.

3. Procédé selon l'une des revendications 1 et 2, caractérisé en ce que, dans le cas où l'on prévoit un circuit de gas de refroidissement (34), la fraction enrichie en hydrocarbures supérieurs est introduite dans le circuit de gas de refroidissement (34).

4. Procédé selon l'une des revendications 1 et 2, caractérisé en ce que, lorsque l'on met en oeuvre un procédé sans circuit de gas de refroidissement, la matière contenant du fer (éponge de fer) retirée chaude est agglomérée.

5. Procédé selon la revendication 4, caractérisé en ce que la matière contenant du fer retirée chaude est agglomérée avec de la poudre de charbon d'une granulométrie de 0,2 à 1 mm.

6. Procédé selon la revendication 5, caractérisé en ce que l'on utilise la poudre de charbon en quantité jusqu'à 1,5%, de préférence de 0,6 à 0,9%, par rapport à la matière contenant du fer.

7. Procédé selon la revendication 1, caractérisé en ce que, pour ajuster une teneur en carbone souhaitée dans la matière en particules contenant du fer, réduite directement, on introduit en outre, sous la zone de réduction, c'est-à-dire dans la partie inférieure du four à cuve, une matière cédant du carbone comme des hydrocarbures supérieurs, liquides dans les conditions normales, du goudron, du bitume ou de la poussière de charbon, éventuellement au moyen d'un gaz porteur.

FIG. 1

FIG. 2